# EUROPÄISCHE PATENTSCHRIFT

(11) **EP 0 864 821 B1**
(45) Veröffentlichungstag und Bekanntmachung des Hinweises auf die Patenterteilung: **21.07.2004**
(21) Anmeldenummer: 98100833.7
(22) Anmeldetag: 20.01.1998
(51) Int. Cl.: F24F 13/14, F16K 1/18

(54) **Luftklappe**
Air damper
Clapet d'air

(30) Priorität: 12.03.1997 DE 19710026
(43) Veröffentlichungstag der Anmeldung: 16.09.1998
(73) Patentinhaber: MAICO ELEKTROAPPARATE-FABRIK GmbH, D-78056 Villingen-Schwenningen (DE)
(72) Erfinder: Schneider, Helmut, Dipl.-Ing. (FH), 78652 Deisslingen (DE)
(74) Vertreter: Gleiss & Grosse

(56) Entgegenhaltungen:
- DE-U- 8 121 554
- US-A- 2 309 425
- US-A- 2 433 749
- US-A- 4 715 581
- US-A- 4 744 290

## Beschreibung

Die Erfindung betrifft eine Luftklappe mit einem Klappenblatt, von dem zwei einander gegenüberliegende Lagerzapfen ausgehen, die in Lageraugen einer Klappenauflage eingreifen.

Luftklappen der eingangs genannten Art sind bekannt (z.B. US-2 309 425-A, UND DE-8 121 554). Sie können beispielsweise in Luftkanälen eingesetzt werden oder aber im Luftauslaßstutzen eines Ventilators. Um bei der Montage der Luftklappe ihre Lagerzapfen in Lageraugen einer Klappenauflage einzubringen, ist es erforderlich, das Klappenblatt so stark durchzubiegen, daß der Abstand der freien Enden der Lagerzapfen etwas kleiner wird als der Abstand zwischen den Lageraugen. Befinden sich die Lagerzapfen in fluchtender Lage zu den Lageraugen, so reduziert der Monteur die für die Verformung auf die Luftklappe übertragenen Verbiegungskräfte, so daß sich die Luftklappe nach und nach entspannt, wodurch sich der Abstand zwischen den freien Enden der Lagerzapfen wieder vergrößert und diese dadurch in die Lageraugen eintreten. Damit ist die Luftklappe schwenkbeweglich montiert. Nachteilig ist, daß aufgrund der Durchbiegung der Luftklappe eine Bruchgefahr besteht, so daß die geschilderten Arbeiten nur von einer feinfühligen, motorisch sicheren Person durchgeführt werden können. Überdies besteht die Gefahr, daß durch die Verformungskräfte eine bleibende Verformung des Klappenblatts eintritt (insbesondere, wenn zu starke Kräfte ausgeübt worden sind), so daß die leichte Beweglichkeit der Luftklappe aufgrund nicht mehr miteinander fluchtender Lagerzapfen nicht mehr gegeben ist und auch der Dichtschluß zur Klappenauflage aufgrund des gewölbten Klappenblatts nicht mehr mit Sicherheit gewährleistet ist.

Aus dem Stand der Technik ist ferner eine Luftklappe bekannt, auf deren Klappenblatt eine blattförmige Dichtung befestigt ist, die sich mit einem Bereich über den Umriß des Klappenblatts erstreckt. Dieser Bereich ist an der Klappenauflage mittels eines Dichtungshalters befestigt. Das vorzugsweise aus Kunststoff bestehende, flexible Dichtungsblatt übt somit einerseits eine Abdichtfunktion und andererseits eine Scharnierfunktion aus. Nachteilig ist, daß aufgrund der flexiblen Dichtung die Luftklappe nicht exakt bei ihrer Öffnungs- beziehungsweise Schließbewegung geführt wird, und daß ein zusätzlicher Dichtungshalter erforderlich ist.

Der Erfindung liegt die Aufgabe zugrunde, eine Luftklappe der eingangs genannten Art zu schaffen, die bei ihrer Montage beziehungsweise Demontage nicht unzulässig verformt werden kann und überdies stets eine sichere Dichtfunktion gewährleistet.

Diese Aufgabe wird erfindungsgemäß dadurch gelöst, daß bei einer Montage- oder Demontageverschiebung der Luftklappe in Längserstreckungsrichtung der Lagerzapfen mindestens einer der Lagerzapfen aus seinem Lagerauge herausziehbar ist, und daß eine zwischen Luftklappe und Klappenauflage wirkende Federeinrichtung vorgesehen ist, die der Verschiebebewegung der Luftklappe entgegenwirkt.

Durch die erfindungsgemäße Ausbildung ist sichergestellt, daß das Einsetzen und Aushängen der Luftklappe bei Montage- beziehungsweise Demontagearbeiten nicht mit einem Durchbiegen des Klappenblatts verbunden ist. Vielmehr erfolgt beispielsweise das Einhängen der Luftklappe derart, daß zunächst einer der Lagerzapfen in sein zugehöriges Lagerauge eingeschoben wird, wobei es zum Spannen der Federeinrichtung kommt. Anschließend wird durch die erwähnte Montageverschiebung die Luftklappe in Längserstreckungsrichtung des Lagerzapfens derart verschoben, daß der andere Lagerzapfen in Gegenüberlage zu seinem Lagerauge gelangt. Wird dann die Luftklappe losgelassen, so entspannt sich die Federeinrichtung und verschiebt die Luftklappe relativ zu den Lageraugen in eine Position, in der beide Lagerzapfen in die Lageraugen eingreifen, so daß die Luftklappe zwar schwenkbar, jedoch unverlierbar an der Klappenauflage gelagert ist. Soll eine Demontage der Luftklappe erfolgen, so wird die Demontageverschiebung der Luftklappe vorgenommen, das heißt, sie wird in Längserstreckungsrichtung einer der Lagerzapfen relativ zu den Lageraugen verschoben, wobei die Federeinrichtung gespannt wird. Hierdurch verläßt einer der Lagerzapfen sein Lagerauge, so daß die Luftklappe aus dem Bereich zwischen den Lageraugen mit diesem Lagerzapfen herausgeschwenkt werden kann. Anschließend wird der weitere, noch im Lagerauge befindliche Lagerzapfen aus seiner Führung unter Entspannen der Federeinrichtung herausgezogen, so daß die Luftklappe freigegeben ist. Da die Federeinrichtung für die Aufnahme der Verformungskräfte ausgelegt ist und die Ebene des Klappenblattes keiner Verformung unterliegt, ist einerseits die zum Stand der Technik erwähnte Bruchgefahr nicht gegeben und andererseits wird auch eine bleibende Verformung der Klappenebene vermieden, so daß die zum Stand der Technik erwähnten Nachteile nicht auftreten.

Nach einer Weiterbildung der Erfindung ist vorgesehen, daß die Federeinrichtung einstückig an der Luftklappe ausgebildet ist. Dies führt zu einer besonders einfachen und kostengünstigen Bauform, wobei die Anordnung der Federeinrichtung an der Luftklappe den Vorteil mit sich bringt, daß die Federwirkung unabhängig von der Stellung der Luftklappe ist, da die Federeinrichtung mit der Bewegung der Luftklappe in gleichem Maße mit verschwenkt und dabei stets in Gegenüberlage zu ihrem Anschlag an der Klappenauflage verbleibt. Ist -nach einem anderen Ausführungsbeispiel- die Federeinrichtung an der Klappenauflage angeordnet, so ist sicherzustellen, daß sie bei jeder beliebigen Klappenstellung mit der Luftklappe zusammenwirken kann. Hierzu ist an der Luftklappe ein Anschlag vorgesehen, daß sie - trotz Klappenbewegung- stets in Gegenüberlage zur Federeinrichtung verbleibt. Beispielsweise kann an der Luftklappe ein rechtwinklig zur Klappenebene verlaufenden Lappen angeordnet sein.

Ferner ist es vorteilhaft, wenn die Federeinrichtung von einem Bereich des Klappenblatts gebildet ist. Dies führt zu einer besonders einfachen Ausgestaltung, weil die Federeinrichtung keine zusätzlichen Teile erfordert, sondern ein Teil des Klappenblatts selbst die Federeinrichtung bildet. Bevorzugt ist die Federeinrichtung als Federsteg ausgebildet. Dieser Federsteg wird bevorzugt dadurch geschaffen, daß das Klappenblatt mit einer randoffenen Ausnehmung versehen wird. Durch die randoffene Ausnehmung wird der Federsteg freigeschnitten. Der Federsteg ist somit ein mit einem Ende einstückig an das übrige Klappenblatt angebundener Abschnitt. Sein freies Ende befindet sich in Gegenüberlage zu einem Lagerauge im Bereich zwischen den beiden Lageraugen. Wird bei der Montage beziehungsweise Demontage der Luftklappe die erwähnte Montage- oder Demontageverschiebung vorgenommen, so tritt das freie Ende des Federstegs selbständig gegen den das Lagerauge umgebenden Materialbereich der Klappenauflage, wodurch die gewünschte Federwirkung erzielt wird.

Ferner ist es vorteilhaft, wenn die Breite des Klappenblatts bereichsweise größer als der Abstand zwischen den freien Enden der Lagerzapfen ist. Diese Ausgestaltung sieht somit einerseits eine Breite des Klappenblatts im Bereich zwischen den Lagerzapfen vor, die kleiner ist als der Abstand zwischen den Lageraugen, um ein Ein- beziehungsweise Aushängen der Luftklappe vornehmen zu können. Daran angrenzend kann das Klappenblatt sich verbreitern, insbesondere breiter sein als der Abstand zwischen den freien Enden der Lagerzapfen, so daß eine relativ große Klappenfläche für einen entsprechend großen Luftdurchsatz geschaffen ist. Die Luftklappe, die insbesondere eine Rückschlagklappe bilden kann, ist bevorzugt aus Kunststoff gefertigt. Dieses Material kann ebenfalls zur Herstellung der Klappenauflage Verwendung finden. Insbesondere ist vorgesehen, daß die Luftklappe im Kunststoffspritzverfahren hergestellt wird, wobei die Lagerzapfen einstückig mit angespritzt werden können. Beim Spritzvorgang wird gleichzeitig die randoffene Ausnehmung erzeugt, so daß sich der Federsteg bildet.

Nach einer weiteren Ausführungsform der Erfindung ist vorgesehen, daß an der der Klappenauflage zugekehrten Seite der Luftklappe eine Dichtung befestigt ist. Diese Dichtung besteht bevorzugt aus einem elastischen, blattförmigen Material, daß beim Schließen der Luftklappe zwischen Klappenblatt und Klappenauflage tritt und auf diese Art und Weise eine gute Abdichtung garantiert. Die Dichtung erstreckt sich bevorzugt auch über die Federeinrichtung, das heißt, der erwähnte, freigeschnittene Federsteg des Klappenblatts wird abgedeckt, so daß durch den Freischnitt keine Luft hindurchtreten kann. Bevorzugt ist vorgesehen, daß sich die Dichtung im Bereich zwischen den Lagerzapfen über die Klappenkontur mit einem Überstandslappen hinaus erstreckt. Dieses hat zur Folge, daß im Bereich der Scharnierachse eine einwandfreie Abdichtung - unabhängig von der Stellung der Luftklappe- erzeugt ist. Der Überstand der Dichtung ist im Scharnierbereich so zu wählen, daß bei vollständig geöffneter Luftklappe die sich durch die Klappenbewegung verschiebende Dichtung dennoch im wesentlichen flächig auf der Klappenauflage aufliegt. Insbesondere weist die Klappenauflage eine Anlagefläche für den Überstandslappen auf. Mithin liegt der Überstandslappen -unabhängig von der Stellung der Luftklappe- an der Klappenauflage dichtend an. Dies wird insbesondere dann erzielt, wenn in Schließstellung der Luftklappe die Ebene des überstandslappens zumindest etwa mit der übrigen Dichtungsebene fluchtet, wobei die Anlagefläche zumindest etwa parallel zur Dichtungsebene verläuft. Mithin werden auf die Dichtung in Schließstellung der Luftklappe keine oder nur geringe Verformungskräfte ausgeübt, das heißt, die Dichtung mit ihrem Überstandslappen befindet sich in einer Ebene. Wird die Luftklappe geöffnet, so verformt sich die blattförmige Dichtung im Bereich der Scharnierachse, also im Bereich der Anbindungszone des Überstandslappens zur übrigen Dichtungsebene, die flächig auf dem Klappenblatt aufliegt. Es ist allerdings auch möglich, daß das Klappenblatt nicht vollflächig von der Dichtung überfangen ist, sondern daß die Dichtung im Bereich des Klappenblatts nur dem Klappenblattrand zugeordnet ist, also eine Art Ringdichtung vorliegt. Wird die Luftklappe in Offenstellung verbracht, so wird durch die Biegung des Anbindungsbereichs des Überstandslappens eine Rückstellkraft erzeugt, die der Eigenspannung des Dichtungsblatts entspricht. Die Rückstellkraft begünstigt die Rückstellung der Luftklappe in Schließstellung. Diese Rückstellkraft, die von der Materialwahl und der maßlichen Dimensionierung der Dichtung abhängt, kann entsprechend größer oder kleiner sein (auch fast gegen Null gehen), so daß sie im letzteren Falle quasi nichts zum Schließvorgang beiträgt. Es wirkt dann fast ausschließlich die Gewichtskraft von Klappe und Dichtung.

Schließlich ist vorgesehen, daß die Dichtung aus einem biegeelastischen Material, insbesondere aus Kunststoff, besteht. Die Zeichnungen veranschaulichen die Erfindung anhand eines Ausführungsbeispiels und zwar zeigt:
- Figur 1: eine Draufsicht auf eine schwenkbeweglich an einer Klappenauflage gehaltenen Luftklappe,
- Figur 2: eine Seitenansicht der Anordnung der Figur 1,
- Figur 3: eine Draufsicht auf das Klappenblatt der Luftklappe,
- Figur 4: eine Draufsicht auf die Klappenauflage,
- Figur 5: eine der Figur 1 entsprechende Darstellung der Luftklappe, wobei die Luftklappe jedoch zur Demontage beziehungsweise Montage in Längserstreckungsrichtung eines ihrer Lagerzapfen verschoben ist.

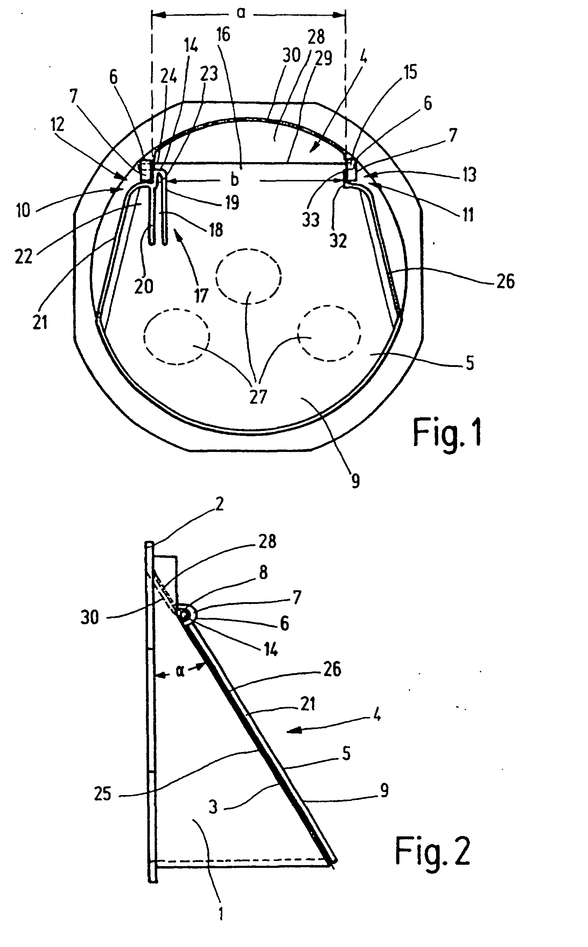

Die Figur 1 zeigt eine rohrförmige Klappenauflage 1, die an einem Ende mit einem kragenförmigen, umlaufenden Flansch 2 versehen ist. Das andere Ende 3 der Klappenauflage 1 bildet eine Öffnung 4, deren Öffnungsebene unter einem spitzen Winkel α zur Ebene des Flansches 2 verläuft. Der Öffnung 4 ist eine Luftklappe 5 schwenkbeweglich zugeordnet, die eine Rückschlagklappe bildet. Mithin kann ein Luftstrom die rohrförmige Klappenauflage 1 in öffnungsrichtung der Luftklappe 5 passieren, wird jedoch in Schließrichtung der Luftklappe abgesperrt. Der Öffnung 4 der Klappenauflage 1 sind -im oberen Bereich der Figur 1- zwei einander gegenüberliegende Lagerböcke 6 zugeordnet. Die Lagerböcke 6 sind vorzugsweise einstückig mit der Klappenauflage 1 hergestellt. Sie bilden Lageraugen 7, das heißt, sie werden von Lageröffnungen 8 durchsetzt. Die Luftklappe 5 weist ein Klappenblatt 9 auf, das eben ausgebildet ist. Das Klappenblatt 9 weist an einander gegenüberliegenden Seiten 10, 11 Einschnitte 12, 13 derart auf, daß Lagerzapfen 14, 15 aus dem Klappenblatt 9 freigeschnitten werden. Bevorzugt weisen somit die Lagerzapfen 14 und 15 dieselbe Dicke wie das Klappenblatt 9 in seinen übrigen Bereichen auf, sie können jedoch -nach einem anderen Ausführungsbeispiel- auch zylindrisch ausgebildet sein. Die Anordnung ist derart getroffen, daß die Breite b des Klappenblatts 9 im Bereich 16 zwischen den Lagerzapfen 14, 15 kleiner ist als der Abstand a zwischen den Lageraugen 7. Diese Ausgestaltung hat zur Folge, daß das Klappenblatt 9 relativ zur Klappenauflage 1 in Längserstreckung der Lagerzapfen 14, 15 verschoben werden kann. Hierdurch ist eine Montage- beziehungsweise Demontageverschiebung der Luftklappe 5 möglich, auf die nachstehend noch näher eingegangen wird. Im Bereich des Lagerzapfens 14 ist eine Federeinrichtung 17 am Klappenblatt 9 ausgebildet. Die Federeinrichtung 17 weist einen Federsteg 18 auf, der durch eine randoffenen Ausnehmung 19 des Klappenblatts 9 realisiert ist. Die randoffene Ausnehmung 19 geht über in den Einschnitt 12. Einschnitt 12 und Ausnehmung 19 bilden - wie insbesondere der Figur 1 zu entnehmen ist- ein auf dem Kopf stehendes U 20, wobei sich innerhalb des U's der Federsteg 18 befindet. An das U 20 grenzt -zum Rande 21 des Klappenblatts 9 hin- ein zungenförmiger Abschnitt 22 des Klappenblatts 9 an, der gewährleistet, daß auch in diesem Bereich eine Abdichtung zur Klappenauflage 1 in Klappenschließstellung realisiert ist. Das freie Ende 23 des Federstegs 18 befindet sich -in der montierten Stellung der Luftklappe gemäß Figur 1- in Gegenüberlage zur Innenseite 24 des zugeordneten Lagerbocks 6, das heißt, es liegt eine Überlappungsposition des freien Endes 23 mit dem Lagerbock 6 -in Längsrichtung der Lagerzapfen 14, 15 gesehen- vor. Im Bereich zwischen den Lagerzapfen 14, 15 ist die Breite b des Klappenblatts 9 zuzüglich der Breite der entspannten Federeinrichtung 17 insgesamt etwas kleiner als der Abstand a.

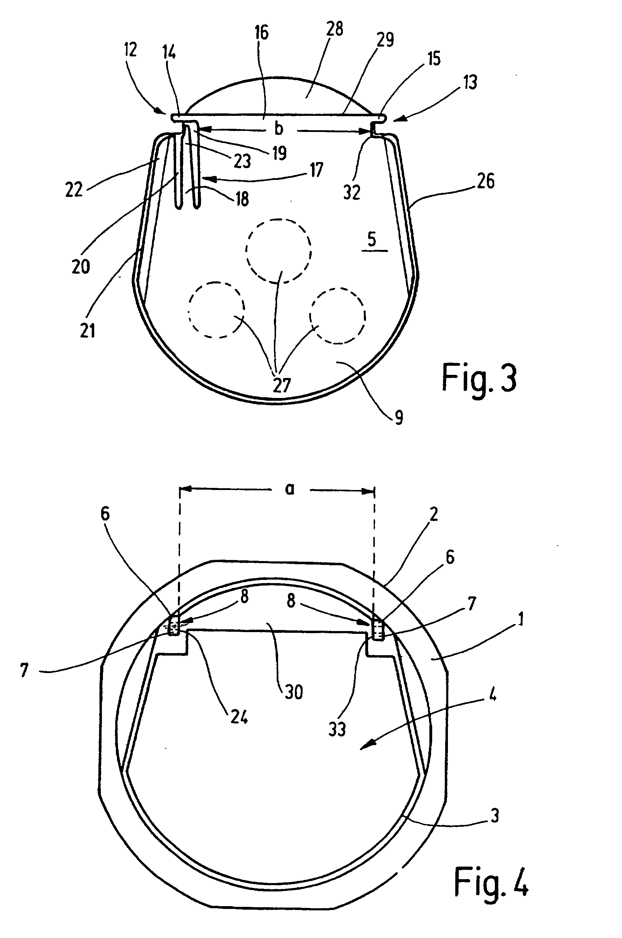

An der der Klappenauflage 1 zugekehrten Seite 25 des Klappenblatts 9 ist eine blattförmige Dichtung 26 befestigt. Die Dichtung 26 kann beispielsweise mittels mehrerer Kleberpunkte 27 an der Seite 25 befestigt sein. Den Figuren 1, 3 und 5 ist deutlich entnehmbar, daß sich die Kontur der Dichtung 26 über die Randkontur des Klappenblatts 9 erstreckt. Hierdurch wird auch das einen Durchbruch bildende U 20 mit abgedeckt. Ferner erstreckt sich die Dichtung 26 mit einem Überstandslappen 28 über den Rand 29 des Bereichs 16 der Luftklappe 5 hinaus. Die Figur 2 zeigt, daß die Klappenauflage 1 eine Anlagefläche 30 aufweist, die parallel zur Ebene der öffnung 4 verläuft, wodurch der überstandslappen 28 der Dichtung 26 in flächige Anlage zur Anlagefläche 30 gelangt. Hierdurch wird -unabhängig von der Winkelstellung der Luftklappe 5- eine Dichtwirkung sichergestellt.

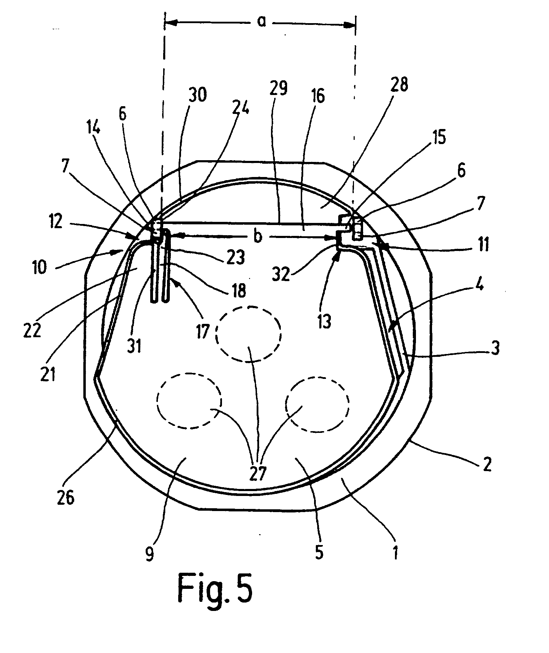

Nachstehend wird auf eine Montage der Luftklappe 5 an der Klappenauflage 1 näher eingegangen. Zum Einhängen der Luftklappe 5 in die Lagerböcke 6 wird zunächst der Lagerzapfen 14 in das zugehörige Lagerauge 7 eingesteckt, wie dies aus der Figur 5 ersichtlich ist. Die Einsteckbewegung läßt eine Montageverschiebung der Luftklappe 5 in Längserstrekkungsrichtung der Lagerzapfen 14, 15 derart zu, daß das freie Ende 23 des Federstegs 18 nach rechts verschwenkt wird, das heißt, hier verkleinert sich die Spaltdicke des U's 20, während auf der gegenüberliegenden Seite des Federstegs 18 ein Spalt 31 mit V-förmigem Grundriß entsteht. Aufgrund der Montageverschiebung der Luftklappe 5 wird somit der Federsteg 18 unter Aufbringung einer Rückstellkraft ausgelenkt. Das Einführen des Lagerzapfens 14 in das Lagerauge 7 kann derart weit vorgenommen werden, daß der andere Lagerzapfen 15 in Gegenüberstellung zum zugeordneten Lagerbock 6 gelangt. Wird jetzt die Luftklappe 5 freigegeben, so drängt die Rückstellkraft des Federstegs 18 die Luftklappe 5 nach rechts (Figur 5), so daß der Lagerzapfen 15 in sein zugehöriges Lagerauge 7 eintritt. Die Luftklappe 5 gelangt somit in die Stellung, wie sie in der Figur 1 gezeigt ist. In dieser Stellung ist eine Verschiebebewegung der Luftklappe 5 entlang der Längserstreckung der Lagerzapfen 14, 15 dadurch beschränkt, daß der Grund 32 des Einschnitts 13 mit geringem Abstand der Innenseite 33 des zugehörigen Lagerbocks 6 gegenübersteht und daß sich das freie Ende 23 mit geringem Abstand zur Innenseite 24 des zugehörigen Lagerbocks 6 befindet. Hierdurch wird die Stellung der Luftklappe 5 positioniert, wobei diese Positionierung auch während einer Schwenkbewegung der Luftklappe 5 relativ zur Klappenauflage 1 erhalten bleibt.

Soll eine Demontage der Luftklappe 5 vorgenommen werden, so wird in umgekehrter Reihenfolge zur zuvor beschriebenen Montage vorgegangen, das heißt, die Luftklappe 5 wird in Demontagestellung verschoben, so daß der Lagerzapfen 15 aus seinem zugeordneten Lagerauge 7 unter Spannung der Federeinrichtung 17 austritt. Anschließend wird die Luftklappe 5 derart verschwenkt, daß der Lagerzapfen 15 aus seiner Gegenüberlage zum zugehörigen Lagerbock 6 gelangt. Wird nun die Luftklappe 5 freigegeben, so entspannt sich die Federeinrichtung 17 und drängt den Lagerzapfen 14 teilweise aus dem zugeordneten Lagerauge 7 heraus. Durch weiteres Herausziehen des Lagerzapfens 14 aus dem Lagerauge 7 wird die Luftklappe 5 dann vollends freigegeben.

## Patentansprüche

1. Luftklappe mit einem Klappenblatt, von dem zwei einander gegenüberliegende Lagerzapfen ausgehen, die in Lageraugen einer Klappenauflage eingreifen, wobei die Breite (b) des Klappenblatts (9) im Bereich (16) zwischen den Lagerzapfen (14,15) derart kleiner als der Abstand (a) zwischen den Lageraugen (7) ausgebildet ist, und wobei bei einer Montage- oder Demontageverschiebung der Luftklappe (5) in Längserstreckungsrichtung der Lagerzapfen (14,15) mindestens einer der Lagerzapfen (14,15) aus seinem Lagerauge (7) herausziehbar ist, **dadurch gekennzeichnet, daß** eine zwischen Luftklappe (5) und Klappenauflage (1) wirkende Federeinrichtung (17) vorgesehen ist, die der Verschiebebewegung der Luftklappe (5) entgegenwirkt.

2. Luftklappe nach Anspruch 1, **dadurch gekennzeichnet, daß** die Federeinrichtung (17) einstückig an der Luftklappe (5) ausgebildet ist.

3. Luftklappe nach einem der vorhergehenden Ansprüche, **dadurch gekennzeichnet, daß** die Federeinrichtung (17) von einem Bereich des Klappenblatts (9) gebildet ist.

4. Luftklappe nach einem der vorhergehenden Ansprüche, **dadurch gekennzeichnet, daß** die Federeinrichtung (17) von einem Federsteg (18) gebildet ist.

5. Luftklappe nach einem der vorhergehenden Ansprüche, **dadurch gekennzeichnet, daß** die Breite des Klappenblatts (9) bereichsweise größer als der Abstand zwischen den freien Enden der Lagerzapfen (14,15) ist.

6. Luftklappe nach einem der vorhergehenden Ansprüche, **dadurch gekennzeichnet, daß** die Luftklappe (5) und/oder die Klappenauflage (1) aus Kunststoff bestehen.

7. Luftklappe nach einem der vorhergehenden Ansprüche, **dadurch gekennzeichnet, daß** an der der Klappenauflage (1) zugekehrten Seite (25) der Luftklappe (5) eine Dichtung (26) befestigt ist.

8. Luftklappe nach Anspruch 7, **dadurch gekennzeichnet, daß** die Dichtung (26) blattförmig ausgebildet ist.

9. Luftklappe nach einem der vorhergehenden Ansprüche 7, 8 **dadurch gekennzeichnet, daß** die Dichtung (26) die an dem Klappenblatt (9) ausgebildete Federeinrichtung (17) abdeckt.

10. Luftklappe nach einem der vorhergehenden Ansprüche 7-9, **dadurch gekennzeichnet, daß** sich die Dichtung (26) im Bereich (16) zwischen den Lagerzapfen (14,15) über die Luftklappenkontur mit einem überstandslappen (28) hinaus erstreckt.

11. Luftklappe nach Anspruch 10, **dadurch gekennzeichnet, daß** die Klappenauflage (1) eine Anlagefläche (30) für den Überstandslappen (28) aufweist.

12. Luftklappe nach einem der vorhergehenden Ansprüche, **dadurch gekennzeichnet, daß** in Schließstellung der Luftklappe (5) die Ebene des überstandslappens (28) zumindest etwa mit der übrigen Dichtungsebene fluchtet und daß die Anlagefläche (30) zumindest etwa parallel zur Dichtungsebene verläuft.

13. Luftklappe nach einem der vorhergehenden Ansprüche 7-12, **dadurch gekennzeichnet, daß** die Dichtung (26) aus einem biegeeleastischen Material, insbesondere aus Kunststoff oder Gummi, besteht.

## Claims

1. Air damper with a damper leaf, from which two opposingly positioned bearing journals project, whereby the same engage the bearing eyes of a damper shoulder, and whereby the width (b) of the damper leaf (9) within the area (16) between the bearing journals (14, 15) is smaller than the distance (a) between the bearing eyes (7), and whereby an installation or dismantling displacement of the air damper (5) in a longitudinal direction of the bearing journals (14, 15) pulls at least one of the bearing journals (14, 15) from its bearing eye (7), **characterised in that** a spring means (17) operatingly located between the air damper (5) and the damper shoulder (1) is envisaged, whereby the same opposes the displacement movement of the air damper (5).

2. Air damper according to claim 1, **characterised in that** the spring means (17) is constructed from one piece at the air damper (5).

3. Air damper according to one of the preceding claims, **characterised in that** the spring means (17) is formed by one area of the damper leaf (9).

4. Air damper according to one of the preceding claims, **characterised in that** the spring means (17) is formed by a spring bridge (18).

5. Air damper according to one of the preceding claims, **characterised in that** the width of the damper leaf (9) is greater in some areas than the distance between the free ends of the bearing journals (14, 15).

6. Air damper according to one of the preceding claims, **characterised in that** the air damper (5) and/or the damper shoulder (1) consists of a synthetic material.

7. Air damper according to one of the preceding claims, **characterised in that** a seal (26) is affixed to the side (25) of the air damper (5) that faces in the direction of the damper shoulder (1).

8. Air damper according to claim 7, **characterised in that** the seal (26) takes the shape of a leaf.

9. Air damper according to one of the preceding claims 7, 8, **characterised in that** the seal (26) covers the spring means (17) affixed to the damper leaf (9).

10. Air damper according to one of the preceding claims 7 to 9, **characterised in that** the seal (26) extends beyond the air damper contour with a projection flap (28) within the area (16) between the bearing journals (14, 15).

11. Air damper according to claim 10, **characterised in that** the damper shoulder (1) comprises a shoulder surface (30) for the projection flap (28).

12. Air damper according to one of the preceding claims, **characterised in that** the plane of the projection flap (28) is aligned at least with the remainder of the seal surface in the closed position of the air damper (5), and **in that** the shoulder surface (30) extends approximately parallel to the seal plane.

13. Air damper according to one of the preceding claims 7 to 12, **characterised in that** the seal (26) consists of a flexible elastic material, especially a synthetic material or a rubber.

## Revendications

1. Volet d'aération équipé d'une feuille de volet de laquelle ressortent deux tourillons opposés l'un à l'autre qui s'engagent dans des oeillets d'un support de volet, la largeur (b) de la feuille de volet (9) dans la zone (16) comprise entre les tourillons (14,15) étant ainsi conçue inférieure à la distance (a) entre les oeillets (7) et au moins l'un des tourillons (14,15) pouvant être retiré de son oeillet (7) lors d'un décalage pour le montage ou le démontage du volet d'aération (5) dans la direction d'extension longitudinale des tourillons (14,15), **caractérisé en ce qu'**un dispositif à ressorts (17) agissant entre le volet d'aération (5) et le support de volet (1) est prévu et s'oppose au mouvement de décalage du volet d'aération (5).

2. Volet d'aération selon la revendication 1, **caractérisé en ce que** le dispositif à ressorts (17) est placé en un seul tenant sur le volet d'aération (5).

3. Volet d'aération selon l'une quelconque des revendications précédentes, **caractérisé en ce que** le dispositif à ressorts (17) est constitué d'une zone de la feuille de volet (9).

4. Volet d'aération selon l'une quelconque des revendications précédentes, **caractérisé en ce que** le dispositif à ressorts (17) est constitué d'un doigt élastique (18).

5. Volet d'aération selon l'une quelconque des revendications précédentes, **caractérisé en ce que** la largeur de la feuille de volet (9) est localement supérieure à la distance entre les extrémités libres des tourillons (14,15).

6. Volet d'aération selon l'une quelconque des revendications précédentes, **caractérisé en ce que** le volet d'aération (5) et/ou le support de volet (1) sont composés de matière synthétique.

7. Volet d'aération selon l'une quelconque des revendications précédentes, **caractérisé en ce qu'**une garniture d'étanchéité (26) est fixée sur le côté (25) adjacent au support de volet (1) du volet d'aération (5).

8. Volet d'aération selon la revendication 7, **caractérisé en ce que** la garniture d'étanchéité (26) se présente sous forme de feuille.

9. Volet d'aération selon l'une quelconque des revendications 7 et 8, **caractérisé en ce que** la garniture d'étanchéité (26) recouvre le dispositif à ressorts (17) placé sur la feuille de volet (9).

10. Volet d'aération selon l'une quelconque des revendications 7 à 9, **caractérisé en ce que** la garniture d'étanchéité (26) s'étend, dans la zone (16) comprise entre les tourillons (14, 15), au-delà du contour du volet d'aération, grâce à une languette en saillie (28).

11. Volet d'aération selon la revendication 10, **caractérisé en ce que** le support de volet (1) présente une surface d'appui (30) pour la languette en saillie (28).

12. Volet d'aération selon l'une quelconque des revendications précédentes, **caractérisé en ce qu'**en position fermée du volet d'aération (5), le plan de la languette en saillie (28) s'aligne au moins à peu près au reste du plan de la garniture d'étanchéité et **en ce que** la surface de contact (30) s'étend au moins à peu près parallèlement au plan de la garniture d'étanchéité.

13. Volet d'aération selon l'une quelconque des revendications précédentes 7 à 12, **caractérisé en ce que** la garniture d'étanchéité (26) est composée d'un matériau élastique en flexion, en particulier d'une matière synthétique ou de caoutchouc.
